# EUROPEAN PATENT APPLICATION

(11) **EP 1 830 097 A1**
(43) Date of publication of application: **05.09.2007**
(21) Application number: 05809320.4
(22) Date of filing: 21.11.2005
(51) Int. Cl.: F16D 65/12, B60B 27/02, F16C 19/18, F16C 33/60, F16C 41/00

(54) **ROLLING BEARING DEVICE**

(30) Priority: 22.11.2004 JP 2004337910
(71) Applicant: JTEKT Corporation, Osaka-shi Osaka 542-8502 (JP)
(72) Inventor: INOUE, Masahiro C7O JTEKT Corporation, Osaka 542-8502 (JP)
(74) Representative: Sajda, Wolf E.
(86) International application number: PCT/JP2005/021370
(87) International publication number: WO 2006/054746

(57) **Abstract**

A rolling bearing assembly includes: an outer member (10) possessing outer raceways (11, 12) on an inner periphery thereof; an inner member (20) possessing inner raceways (21, 22) formed on an outer periphery thereof and opposing the outer raceways (11, 12), and including a shaft body (3) of the bearing assembly; rolling elements (4) interposed between the inner raceways (21, 22) and the outer raceways (11, 12) in opposing relation; a wheel-mounting flange (5) disposed on an outer periphery of the outer member (10); and a brake rotor (7) mounted to the outer periphery of the outer member (10) without relying on the wheel-mounting flange (5) as allowed to move axially in a predetermined axial range relative to the outer member (10) but inhibited from moving circumferentially. Thus, the bearing assembly achieves unitization at reduced manufacture costs and is capable of effectively suppressing brake judder.

## Description

### Technical Field

The present invention relates to a rolling bearing assembly which is used as mounted with a brake rotor.

### Background Art

A rolling bearing assembly for use in automotive wheel, for example, is constituted such that a hub shaft as a shaft body is rotatably supported and adapted to be mounted with a wheel (road wheel) and a brake rotor of a disk brake. Such a rolling bearing assembly is generally called a hub unit, as well.

Such a rolling bearing assembly is normally formed with a flange for mounting the brake rotor and the wheel. In response to the recent demand for unitizing automotive parts, this flange tends to be unified with an inner or outer ring of the rolling bearing assembly. More recently, so-called third generation hub units have been used widely. A third-generation hub unit disclosed in Japanese Unexamined Patent Publication No.2001-180 211, for example, achieves the above unitization by unifying the above flange with the hub shaft. It is a common practice to fasten the brake rotor and the wheel to such a flange by means of hub bolts. In this case, the brake rotor is interposed between the flange and the wheel so as to be secured to place as clamped between the flange and the wheel.

According to the above prior-art rolling bearing assembly, the brake rotor is mounted to the flange unified with the hub shaft. In order to prevent the side runout of the brake rotor, therefore, the flange must be increased in runout precisions, thus leading to the increase of manufacture costs. Since there is a ceiling on the increase of the runout precisions of the flange, the brake rotor suffers the side runout, causing brake judder at braking.
In addition, the aforesaid hub shaft being formed involves a relatively significant deformation which results from a great difference between outside diameters of a cylinder portion and the flange of the hub shaft. Hence, the hub shaft requires an increased forming cost. In a case where the hub shaft is forged, for example, a high forging cost is required because a press work machinery having high pressure is required, because the forging process must be hot forging rather than cold forging or warm forging, or because the number of forging steps is increased.

In view of the foregoing, it is an object of the invention to provide a rolling bearing assembly which achieves not only the unitization but also the manufacture cost reduction and which is adapted for an effective reduction of the brake judder.

### Disclosure of the Invention

According to the invention, a rolling bearing assembly comprises: an outer member possessing an outer raceway on an inner periphery thereof; an inner member possessing an inner raceway formed on an outer periphery thereof and opposing the outer raceway, and including a shaft body of the bearing assembly; rolling elements interposed between the inner raceway and the outer raceway in opposing relation; a wheel-mounting flange disposed on an outer periphery of the outer member; and a brake rotor mounted to the outer periphery of the outer member without relying on the wheel-mounting flange, as allowed to move relative to the outer member in a predetermined axial range but inhibited from moving circumferentially.

According to this constitution, the brake rotor is mounted to the outer member without relying on the wheel-mounting flange and hence, the side runout precisions of the brake rotor are not affected by the precisions of the flange. Therefore, the runout precisions required of wheel-mounting flange are lowered. Furthermore, the brake rotor is movable in the predetermined axial range so as to be capable of functioning as a so-called floating rotor. This leads to an effective suppression of the brake judder. Although the brake rotor mounted to place by way of the wheel-mounting flange cannot be designed to be movable in the predetermined axial range, the brake rotor may be adapted to function as the so-called floating rotor by adopting the aforementioned constitution.

It is preferred that the brake rotor is a substantially flat annular member, an inner periphery of which is engaged with the outer periphery of the outer member.
In this case, the brake rotor has a relatively simplified configuration and is directly mounted to the outer periphery of the outer member without relying on a rotor mounting member. Hence, the outer member may also have a relatively simplified configuration so that the whole body of the bearing assembly may be simplified in structure. As a result, the constitution can contribute to the reduction of size, weight and cost of the bearing assembly.

It is preferred that the outer periphery of the outer member is formed with outer peripheral concavo-convex portions which are extending axially and which are engaged with rotor concavo-convex portions formed on the brake rotor, and that the brake rotor is fixed to the outer member by means of a double-ended ring-like member as allowed to move in the predetermined axial range, the double-ended ring-like member mounted to the outer periphery of the outer member.
Such a constitution makes it quite easy to fix the brake rotor to the outer member in a manner that the brake rotor is allowed to move in the predetermined axial range but inhibited from moving circumferentially.

It is preferred that the wheel-mounting flange is independent from the outer member and is fixed to the outer member by way of engagement between flange concavo-convex portions formed on the flange and the outer peripheral concavo-convex portions. Such a constitution permits the wheel-mounting flange, independent from the outer member, to be easily fixed to the outer member. Since the wheel-mounting flange and the brake rotor are independent from the outer member, the outer member may have a relatively simplified configuration of a substantially cylindrical shape, so that the outer member may be formed easily.

The invention may also have a constitution wherein the shaft body comprises a press molded article and includes a shaft flange independent from the shaft body and used for mounting the shaft body to a vehicle body. The shaft body may employ the press molded article such as to be reduced in manufacture cost as compared with a case where the shaft body is a hot forged article. Since the shaft flange is independent from the shaft body, the shaft body may have a relatively simplified configuration free from the flange. Hence, the shaft body may be easily press molded.

According to the above aspect of the invention wherein the shaft body comprises the press molded article, it is preferred that the inner and outer raceways and the rolling elements are arranged in double rows and that out of the double-row inner raceways, the inner raceway on an axially outer side comprises a ring-like inner ring member formed from a bearing steel and fixed to the outer periphery of the outer ring.
By virtue of the double-row structure, the bearing assembly is increased in load carrying capacity for load acting thereon or particularly for an axial load. The double-row structure has a tendency that the outer side is subjected to a greater load than the inner side. Even though the shaft body opts for a material having a lower strength than the bearing steel in the light of press-moldability, the bearing assembly may be increased in the load carrying capacity by forming the outer-side inner raceway from the bearing steel. Furthermore, the bearing assembly may also be increased in wear resistance.

According to the above aspect of the invention comprising the shaft flange, the bearing assembly may further comprise a sensor substantially shaped like a column and serving to detect the motion of a road wheel and is characterized in that the sensor is mounted in a through-hole formed in the shaft flange.
Such a constitution provides quite a simplified sensor mounting structure. The constitution also increases the degree of freedom of sensor mounting position, so that the sensor is increased in generality.

### Brief Description of the Drawing

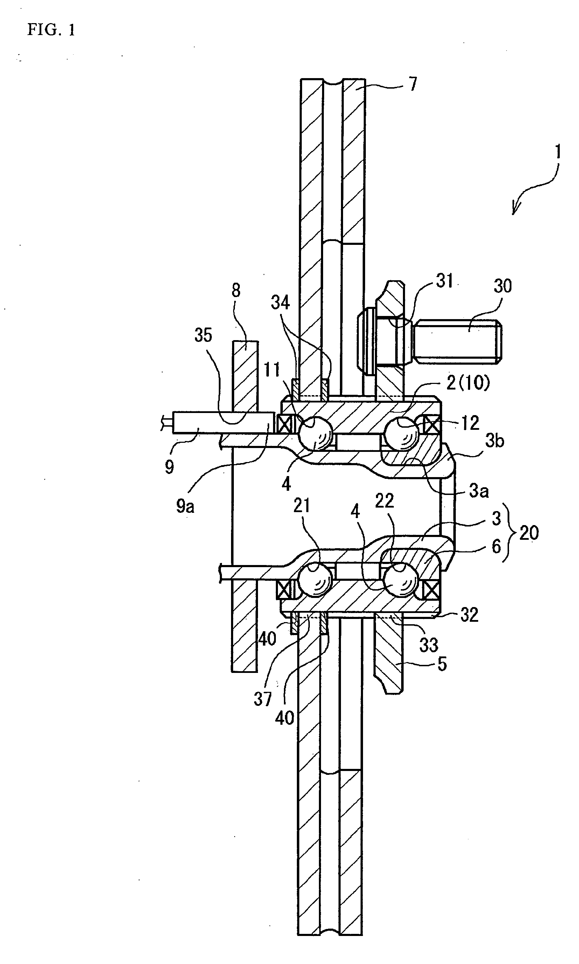

- FIG. 1: is a sectional view of a rolling bearing assembly according to one embodiment of the invention.

### Best Mode for Carrying Out the Invention

The embodiment of the invention will be described hereinafter with reference to the accompanying drawing.
FIG. 1 is a sectional view of a rolling bearing assembly 1 according to one embodiment of the invention. The rolling bearing assembly 1 includes: an outer ring 2 as an outer member 10 including double-row outer raceways 11, 12 on an inner periphery thereof; an inner member 20 an outer periphery of which includes double-row inner raceways 21, 22 respectively opposing the outer raceways 11, 12 and which includes a shaft body 3 of the bearing assembly; double-row balls 4 as rolling elements interposed between the inner raceways and the outer raceways in opposing relation; and a wheel-mounting flange 5 disposed on an outer periphery of the outer ring 2. The inner member 20 includes the aforesaid shaft body 3, and a ring-like inner ring member 6 fixed to an outer periphery of the shaft body 3.

The wheel-mounting flange 5 is disposed on an outer side of the outer ring 2, includes a bolt hole 31 allowing a hub bolt 30 to be inserted therethrough, and is fastened to a wheel (not shown) by means of the hub bolt 30. Thus, the rolling bearing assembly 1 constitutes a hub unit of a so-called outer-ring rotation type and is used in a driven wheel rather than a driving wheel.

A brake rotor 7 is directly mounted to the outer periphery of the outer ring 2 without relying on the wheel-mounting flange 5. The brake rotor 7 is mounted to the outer periphery of the outer ring 2 at a different place from that of the wheel-mounting flange 5, or specifically at place shifted from the wheel-mounting flange 5 to an inner side.

On the other hand, a shaft flange 8 for mounting the shaft body 3 to a vehicular knuckle (not shown) is extending from an outer periphery of an inner-side end of the shaft body 3. The shaft flange 8 is a flat annular member extending radially and has its inner periphery welded to the outer periphery of the shaft body 3. The shaft flange 8 is formed with an unillustrated bolt hole such that the shaft flange 8 and the knuckle may be fastened to each other by means of a bolt.

Furthermore, a column-like (stick-like) sensor 9 is mounted in a through-hole 35 axially extending through the shaft flange 8. An inside diameter of the through-hole 35 is substantially equal to an outside diameter of the sensor 9, so that the sensor 9 inserted through the through-hole 35 is fixed therein as positioned with high precisions. The sensor 9 has its tip 9a located in close adjacency to a member, such as the outer ring 2, which is rotated along with a road wheel.
Thus, the sensor detects the motion of such a rotary member. The sensor 9 is provided for detecting the motion of the road wheel (wheel) moved in unison with the outer ring 2 and the like. Specifically, the sensor 9 operates to detect the rotational speed or direction of the road wheel. The sensor 9 constitutes a part of various vehicular control systems such as an ABS system.
The sensor 9 may be exemplified by an active sensor employing a semiconductor device such as a Hall element and a magnet resistance element. In addition, a pulser ring, the illustration of which is omitted, may also be disposed on the outer ring 2 at place opposite the aforesaid tip 9a.

The brake rotor 7 is a so-called ventilated type and is generally constituted by a substantially flat annular member. While the brake rotor 7 according to the embodiment is directly mounted to the outer periphery of the outer ring 2, the brake rotor 7 may also be mounted to the outer ring 2 by means of a rotor mounting member (not shown) independent from the outer ring 2 and the brake rotor 7.
Alternatively, the brake rotor may also be mounted to the outer ring 2 via a rotor-mounting projection (not shown) formed integrally with the outer ring 2. The brake rotor 7 is not limited to the substantially flat member as illustrated by the embodiment. Although not shown in the figure, the brake rotor may also be of a type wherein a rotor includes an axial flange axially extending from an outside circumference thereof and a brake pad is pressed against an inner periphery of the axial flange for effecting a braking action.

The outer ring 2 substantially defines a cylindrical shape without the flange. The wheel-mounting flange 5 and the brake rotor 7 are independent from the outer ring 2. The wheel-mounting flange 5 and the brake rotor 7 are mounted to the outer ring 2 in a circumferentially unmovable relation therewith by means of an outer peripheral spline 32 as outer peripheral concavo-convex portions formed on the outer periphery of the outer ring 2.
Specifically, an inner periphery of the wheel-mounting flange 5 is formed with an inner peripheral spline 33 as flange concavo-convex portions meshed with the above outer peripheral spline 32. Similarly, an inner periphery of the brake rotor 7 is formed with an inner peripheral spline 37 as rotor concavo-convex portions meshed with the above outer peripheral spline 32.
Thus, the outer peripheral spline 32 is in meshing engagement with the inner peripheral splines 33, 37. The wheel-mounting flange 5 is not only in the aforesaid spline engagement with the outer periphery of the outer ring 2, but is also welded thereto, whereby the wheel-mounting flange is fixed to the outer ring 2 as inhibited from moving in the axial direction as well.

According to the embodiment, the outer periphery of the outer ring 2 is formed with, but not limited to, the spline. What is required is to form the concavo-convex portions extending axially. In order to distribute stress on the concavo-convex portions, the concavo-convex portions may preferably be formed at three or more circumferential places and arranged with equal circumferential spacing.
For instance, a constitution may be made such that the outer periphery of the outer ring 2 is formed with a respective convex portion at a circumferential interval of 120° while the inner peripheries of the wheel-mounting flange 5 and the brake rotor 7 are formed with concave portions to engage with the corresponding convex portions.
In this case, the convex portions are formed on the outer periphery of the outer ring 2, whereas the other portions than the convex portions are recessed from the convex portions or define concave portions. Thus, the concavo-convex portions are formed on the outer periphery of the outer ring 2.

The brake rotor 7, mounted to the outer ring 2 by way of the aforesaid spline engagement, is inhibited from circumferentially moving relative to the outer ring 2 but is allowed to move axially in a predetermined range. Thus, the brake rotor is adapted to function as a so-called floating rotor.
Specifically, the range of the axial movement of the brake rotor 7 is limited by a double-ended ring-like member 34 disposed on the outer periphery of the outer ring 2. The double-ended ring-like member 34 is typically exemplified by a C-shape retaining ring, snap ring or the like. The ring-like member is fitted in a circumferential groove 40 formed on the outer ring 2, thus defining the portion radially projected from the aforementioned outer peripheral spline 32.
The double-ended ring-like member 34 may be elastically deformed to be increased in diameter, so as to be fitted in the circumferential groove 40 from radially outward side of the outer ring 2. Two of the aforesaid ring-like members 34 are disposed on axially opposite sides of the brake rotor 7. Minor gaps are defined between the brake rotor 7 and these ring-like members 34, permitting the brake rotor 7 to move in the predetermined axial range.

The shaft body 3 is not a solid member but a hollow member having a predetermined thickness. The shaft body 3 is a press molded article such as formed by deep-draw press. Any suitable material easy to press mold, such as low carbon steel, may be selected as a material of the shaft body 3. Examples of the suitable low carbon steel include steel materials having carbon contents of 0.2 wt% or less, Mn contents of 1.6 wt% or less, Si contents of 0.5% or less, P contents of 0.05% or less and S contents of 0.05% or less.
The shaft flange 8 may also employ a press molded article, so as to contribute to cost reduction. The preferred materials and conditions for press molding the shaft flange 8 are the same as those of the aforementioned shaft body 3.

As described above, the rolling bearing assembly 1 has the double-row structure including the double-row inner raceways 21, 22. Of these, the inner raceway 21 on the inner side is defined by the outer periphery of the shaft body 3, whereas the inner raceway 22 on the outer side is defined by the inner ring member 6. The inner ring member 6 is fitted on a small diameter portion 3a defined by an outer-side portion of the shaft body 3 and is fixed to the shaft body 3 as axially pressurized by a caulking portion 3b formed by plastically deforming an outer-side edge of the shaft body 3.
Bearing steel may preferably be used as a material of the inner ring member 6.

### Examples of the suitable bearing steel include SUJ1, SUJ2, SUJ3, SUJ4 and SUJ5 specified by JIS G4805.

The rolling bearing assembly 1 having the aforementioned constitution provides the following working effects.
Unlike the aforementioned prior-art bearing assembly, the brake rotor 7 is mounted to the outer ring 2 without relying on the wheel-mounting flange 5 disposed on the outer ring 2. Therefore, the side runout precisions of the brake rotor 7 are not affected by the precisions of the flange 5, so that the runout precisions required of the flange 5 are lowered. Hence, the manufacture costs of the shaft body 3 and the wheel-mounting flange 5 may be reduced.

The brake rotor 7 is movable in the predetermined axial range so as to function as the so-called floating rotor. Therefore, the brake judder may be suppressed effectively. It is impossible to fix the wheel to the flange with axial play. In a case where the brake rotor 7 is mounted to the outer ring via the wheel-mounting flange 5, therefore, it is impossible to adopt the constitution wherein the brake rotor 7 is allowed to move in the predetermined axial range. In contrast, the rolling bearing assembly 1 has the constitution wherein the brake rotor 7 is mounted to the outer ring 2 without relying on the wheel-mounting flange 5, so as to be able to function as the so-called floating rotor.

In the rolling bearing assembly 1, the brake rotor 7 is the substantially flat annular member and has the inner periphery engaged with the outer periphery of the outer ring 2. Thus, the brake rotor 7 has a relatively simplified configuration and is directly mounted to the outer periphery of the outer ring 2 without relying on the rotor-mounting portion or the like. Therefore, the outer ring 2 may be constructed in a relatively simplified configuration so that the rolling bearing assembly 1 is simplified in structure. Thus, the constitution of the invention can contribute to the reduction of the size, weight and cost of the bearing assembly.

As described above, the brake rotor 7 is in spline engagement with the outer ring 2 and the axial movement thereof is limited by means of the double-ended ring-like member 34 typically exemplified by the C-type retaining ring or the like. Therefore, the brake rotor 7 capable of functioning as the so-called floating rotor may be easily mounted to the outer ring 2 by way of the simple structure.

The wheel-mounting flange 5 is independent from the outer ring 2 and is in spline engagement with the outer ring 2. Thus, the wheel-mounting flange 5 independent from the outer ring 2 is fixed to the outer ring 2 by way of the simple structure. The wheel-mounting flange 5 and the brake rotor 7 are independent from the outer ring 2, so that the outer ring 2 may have a relatively simplified configuration of a substantially cylindrical shape. Thus, the manufacture cost of the outer ring 2 may be reduced.

The shaft body 3 is constituted by the press molded article, so as to be dramatically reduced in manufacture cost as compared with a case where the shaft body is constituted by a hot forged article or the like. The shaft flange 8 is independent from the shaft body 3, so that the shaft body 3 may have a relatively simplified configuration, which makes it easy to press mold the shaft body 3.

The rolling bearing assembly 1 has the double-row structure thereby obtaining an increased load carrying capacity for load acting thereon or particularly for an axial load, as compared with a bearing assembly having a single-row structure. The double-row structure has a tendency that out of the double-row inner raceways 21, 22, the inner raceway 22 on the outer side is subjected to a greater load than the inner raceway 21 on the inner side.
Even though the shaft body 3 is formed from the material, such as the low carbon steel, having a lower strength than the bearing steel, therefore, the bearing assembly may be increased in the load carrying capacity for the load by forming the inner raceway 22 on the outer side from the bearing steel. Furthermore, the bearing assembly may also be increased in wear resistance.
The use of the inner ring member 6 formed from the bearing steel prevents the rolling bearing assembly 1 from being decreased in the load carrying capacity, although the shaft body 3 is formed from the material, such as the low carbon steel, which has the relatively low strength and is easy to press mold.

The sensor 9 is shaped like a column (stick) and is inserted through the through-hole 35 formed in the shaft flange 8 so as to be mounted to the shaft flange. Thus, a sensor mounting structure is quite simplified. The mounting position of the sensor 9 may be varied by changing the position of the through-hole 35 as needed, so that the rolling bearing assemblies 1 including the outer rings 2 having any diameters may use the common sensor 9. Hence, the sensor 9 may be increased in generality.

As described above, the shaft flange 8 is independent from the shaft body 3, while the wheel-mounting flange 5 is independent from the outer ring 2. The shaft flange 8 and the wheel-mounting flange 5 have relatively simple annular shapes. As compared with the case where the flanges are unified with the shaft body, therefore, it is much more easy to form the shaft flange 8 and the wheel-mounting flange 5. The shaft flange 8, in particular, may also be a press molded article, thus contributing to the reduction of manufacture costs of the rolling bearing assembly 1.

According to the rolling bearing assembly 1 of the embodiment, the wheel-mounting flange 5 and the outer ring 2 are independent from each other, while the shaft flange 8 and the shaft body 3 are independent from each other. However, these components are unitized by quite an easy method. As a result, the rolling bearing assembly 1 unitizing the wheel-mounting flange 5 and the shaft flange 8 is provided, thus achieving the same unitization as that of the so-called third generation hub unit of the prior art.

## Claims

1. A rolling bearing assembly comprising:
- an outer member possessing an outer raceway on an inner periphery thereof;
- an inner member possessing an inner raceway formed on an outer periphery thereof and opposing the outer raceway, and including a shaft body of the bearing assembly;
- rolling elements interposed between the inner raceway and the outer raceway in opposing relation;
- a wheel-mounting flange disposed on an outer periphery of the outer member; and
- a brake rotor mounted to the outer periphery of the outer member without relying on the wheel-mounting flange, as allowed to move relative to the outer member in a predetermined axial range but inhibited from moving circumferentially.

2. A rolling bearing assembly according to Claim 1,
wherein the brake rotor is a substantially flat annular member, an inner periphery of which is engaged with the outer periphery of the outer member.

3. A rolling bearing assembly according to Claim 1 or 2,
wherein the outer periphery of the outer member is formed with outer peripheral concavo-convex portions which are extending axially and which are engaged with rotor concavo-convex portions formed on the brake rotor, and
wherein the brake rotor is fixed to the outer member by means of a double-ended ring-like member as allowed to move in the predetermined axial range, the double-ended ring-like member mounted to the outer periphery of the outer member.

4. A rolling bearing assembly according to Claim 3,
wherein the wheel-mounting flange is independent from the outer member and is fixed to the outer member by way of engagement between flange concavo-convex portions formed on the flange and the outer peripheral concavo-convex portions.

5. A rolling bearing assembly according to any one of Claims 1 to 4,
wherein the shaft body comprises a press molded article and includes a shaft flange independent from the shaft body and used for mounting the shaft body to a vehicle body.

6. A rolling bearing assembly according to Claim 5,
wherein the inner and outer raceways and the rolling elements are arranged in double rows,
wherein out of the double-row inner raceways, the inner raceway on an axially outer side comprises a ring-like inner ring member formed from a bearing steel and fixed to the outer periphery of the outer ring.

7. A rolling bearing assembly according to Claim 6,
further comprising a sensor substantially shaped like a column and serving to detect the motion of a road wheel,
wherein the sensor is mounted in a through-hole formed in the shaft flange.
